# EUROPEAN PATENT APPLICATION

(11) **EP 0 780 683 A2**
(43) Date of publication of application: **25.06.1997**
(21) Application number: 96309139.2
(22) Date of filing: 13.12.1996
(51) Int. Cl.: G01N 25/68

(54) **Apparatus for dewpoint determination**

(30) Priority: 18.12.1995 GB 9525823
(71) Applicant: PROTIMETER PLC, Marlow, Buckinghamshire SL7 1LX (GB)
(72) Inventor: Dadachanji, Fali Minocher, Marlow, Buckinghamshire SL7 2DE (GB)
(74) Representative: Howden, Christopher Andrew

(57) **Abstract**

Apparatus for dewpoint determination includes an elongate mirror or glass plate (10) which is cooled at one end (12), or is cooled differentially at opposite ends, so that as the mean temperature of the mirror or plate falls, a temperature gradient is at the same time established along the plate so that as dew starts to form on the plate or mirror, it does so as a wave which travels along the plate or mirror as cooling progresses. Electro-optical sensing means (L,D) senses the passage of the front of this wave past a location on the plate or mirror at which a temperature sensor (T) is disposed, the temperature sensed just as the dew wave front passes corresponding to the dewpoint. In variants a temperature sensor is not necessarily located at the position of the electro-optical sensing means, but the temperature at the location of the electro-optical sensing means is calculated from the temperatures at the ends of the plate or mirror, and the calculated temperature gradient, at the time of passage of the dew wave. In other variants the electro-optical sensing means is scanned along the plate or mirror and the position of the dew wave front determined from the instant during the scan at which the front is detected. The invention improves the accuracy of dewpoint determination by reducing or eliminating uncertainty as to the actual point of commencement of dew formation.

## Description

THIS INVENTION relates to apparatus for the determination of the dewpoint, and hence the humidity of a gas.

Dewpoint measuring instruments are known which incorporate a mirror which is cooled until a layer of dew forms on the mirror surface, thereby producing a perceptible change in the appearance of the mirror. The temperature of the mirror is measured whilst it is being cooled and the temperature at which dew formation is detected is taken as the dewpoint. Formation of dew is commonly detected by illuminating the mirror by a predetermined light source, for example, an electric light bulb or an LED and monitoring the reflected light by means of a photosensitive electronic device such as a photodiode or phototransistor, a change in the electrical output from such device being arranged to provide a signal indicating that dew has just started to form.

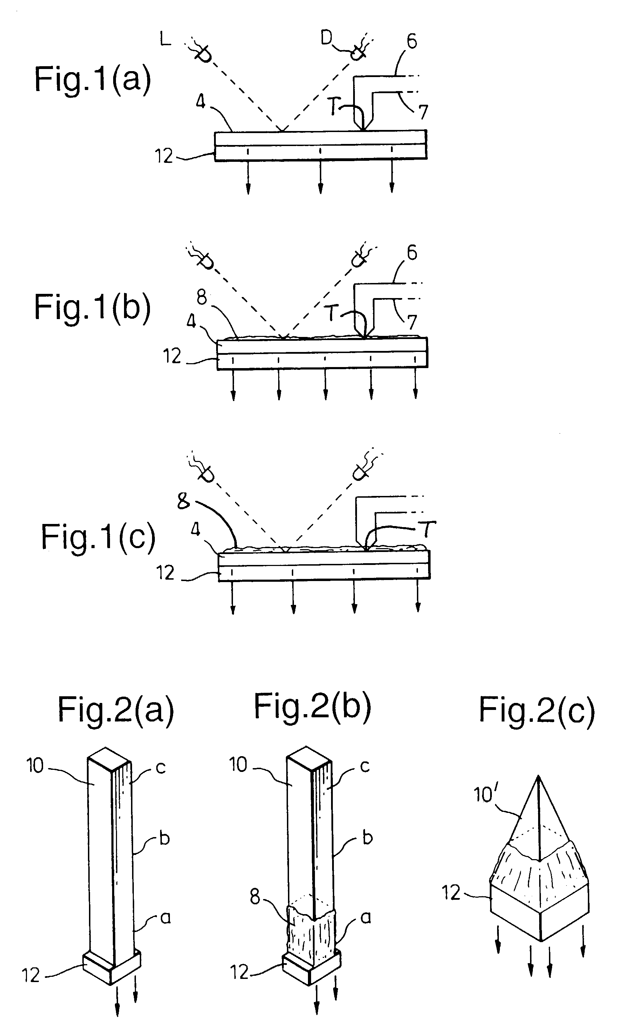

A dewpoint measuring instrument of this kind is illustrated schematically at three different stages in the cooling phase, in Figures 1(a), 1(b) and 1(c) respectively. Figures 1(a), 1(b) and 1(c) are schematic illustrations, each representing a side elevation view along a direction lying in the plane of the mirror indicated by reference 4. Reference 12 represents cooling means (for example utilising the Peltier effect) in thermal contact with the back or lower surface of the mirror for cooling the same, the arrows representing the removal of heat from the mirror by the cooling means 12.

Reference T represents an electrical or electronic temperature-sensing device, such as a thermistor, engaging the front or upper surface of the mirror and connected by electrical conductors 6, 7 with conventional apparatus, not shown, for determining the mirror temperature from the signals provided on conductors 6, 7 by device T. Reference L indicates the electric light bulb or LED arranged to direct light onto the surface of mirror 4, along an oblique path represented by a broken line, to be reflected from the mirror to the photosensitive electronic device (e.g. photodiode or phototransistor), referenced D.

Figures 1(a), 1(b) and 1(c) illustrate the instrument at successively lower temperatures in the course of a cooling cycle. Thus, Figure 1(a) illustrates the condition where the mirror temperature is above the dewpoint, Figure 1(b) illustrates the condition where the temperature of the mirror is such that only a light deposit of dew, indicated at 8, has formed on the mirror 4 and Figure 1(c) illustrates the condition where, at a lower temperature a heavier deposit of dew 8 has been formed. It will be appreciated that, in practice, the dew detecting arrangement, comprising the light source L and photodetector D and associated circuitry can only provide an indication of dew formation after a light deposit of dew has already formed, the extent of which depends upon the sensitivity of the photo detector, and the level of random light fluctuation and electrical noise the apparatus is required to ignore for reliable dew detection and so on. Thus, with conventional apparatus, inaccuracies arise in such conventional apparatus because, *inter alia,* the precise moment at which dew starts to form is not accurately determined and/or the precise temperature of the mirror surface at that moment is not accurately determined.

It is an object of the present invention to provide an improved dewpoint determining apparatus of the kind specified.

According to one aspect of the invention there is provided apparatus for the determination of the dewpoint in a gas comprising an elongate bar exposed to said gas and providing a surface for condensation of moisture from said gas, means at at least one end of said bar for cooling the bar, means for sensing the temperature of the bar at a location intermediate its ends and means for detecting the appearance of condensation at said location.

Preferably means is provided for cooling both ends of the bar whilst maintaining a temperature difference between said ends of the bar.

Preferably the bar is arranged to be cooled at only one end thereof and increases in cross section towards said one end.

Said means for sensing the temperature of said bar at said location intermediate its ends may comprise a temperature sensor embedded in the bar at said location or may comprise a remote temperature sensor, such as an infra-red temperature sensor.

In one embodiment of the invention, a combined remote temperature sensor and optical sensor for detecting the occurrence of condensation is utilised.

In another embodiment of the invention, a plurality of condensation detectors are provided for detecting the formation of condensation on the bar at respective locations between said ends and a plurality of temperature sensors are provided for detecting the temperature of the respective surface of the bar at respective locations between its ends.

In a preferred embodiment of the invention, the apparatus comprises a conduit for the gas to be monitored and said bar is arranged to extend transversely across said conduit.

Embodiments of the invention are described below, by way of example, with reference to the accompanying drawings, in which:-
FIGURES 1(a), 1(b) and 1(c) illustrate the known dewpoint determining apparatus referred to,
FIGURES 2(a) and 2(b) illustrate schematically the formation of dew on a cooled elongate bar,
FIGURE 2(c) illustrates the formation of dew upon a tapering bar,
FIGURES 3 to 5, 6(a), 6(b) and 7 inclusive are similar perspective views of a schematic character illustrating respective embodiments of the invention,
FIGURE 8 is a schematic perspective view of part of a further embodiment of the invention,
FIGURE 9(a) is a schematic perspective view illustrating a gas-monitoring arrangement embodying the invention, and
FIGURE 9(b) is a cross-sectional view of the arrangement of Figure 9(a).

An element of an embodiment of the invention, for determining the dewpoint, is shown schematically in Figures 2(a) and 2(b). Figure 2(a) shows an elongate flat bar or plate 10 which is arranged to be preferentially cooled at one end by cooling means 12. The temperature at end (a) of the bar 10, nearest the cooling means 12, will be lower than the temperature at locations (b) and end (c) which are progressively further from the cooling means 12, that is to say there will be a temperature gradient between locations (a) and (c), with heat being conducted along the bar from end (c) to end (a). Location (b) is the middle of the bar. When location (a) is at dewpoint temperature the areas (b) and (c) will be at temperatures higher than dewpoint and condensate film (dew) 8 will form at (a) but not at (b) and (c). However, if end (a) is continually cooled so that the temperature at (a) is lowered progressively, the temperature at (b) will eventually reach dewpoint and eventually the temperature at end (c) will also reach dewpoint. It will be evident from the above that the bar surface between (a) and (c) will have a progressive "wave" of dew forming on it as the temperature of bar 10 is progressively lowered. The flat bar or plate can be replaced by a tapering shape for more efficient transfer of heat, such as the pyramidal shape 10', illustrated in Figure 2(c). In Figures 2(a) to 2(c) the arrows again represent removal of heat.

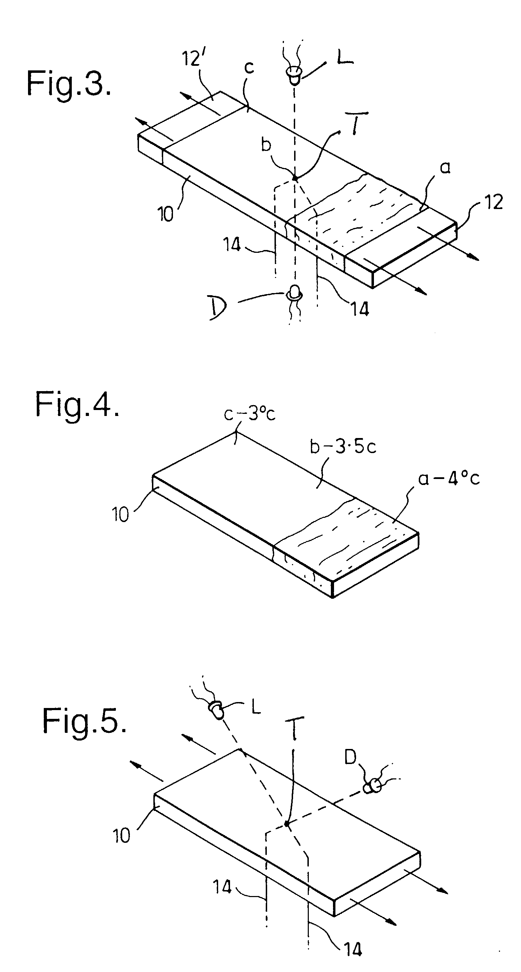

The preferred embodiments of this invention utilise such a progressive "wave" of condensation to measure dewpoint accurately. Referring to Figure 3, this shows at 10, an elongate transparent bar, for example of glass, having an electrical temperature sensing device (T) secured to or embedded in the bar at point (b) intermediate the ends (a) and (c) of the bar, the temperature sensing device having leads 14 extending to electronic signal processing apparatus (not shown). A light source (L) and a light-sensitive electronic detector (D) are disposed as shown on opposite sides of the bar 10. Cooling means 12 and 12' (e.g. Peltier cooling devices) are engaged with opposite ends (a) and (b) of the bar 10. Both ends (a) and (c) are progressively cooled by their respective cooling means so that end (a) is at a temperature lower than end (c) by say, 1 or 2°C, so that a thermal gradient is set up in the bar 10 between opposite ends (a) and (c). When the dew "wave" passes precisely through point (b) the optical signal received by sensor (D) will be diminished and the temperature at location (b), as measured by the temperature sensor at this instant is taken as the dewpoint. The temperature so sensed may be recorded electronically on a temporary or permanent basis. It will be understood that the device (T) is small in relation to the width of the light beam passing from light source (L) to detector (D) and thus does not materially obstruct such light.

Figure 4 illustrates the bar 10 of Figure 3 in use of the apparatus. For ease of illustration, the cooling means 12, 12' and items (L), (D), (T) and 14 are not shown in Figure 4.

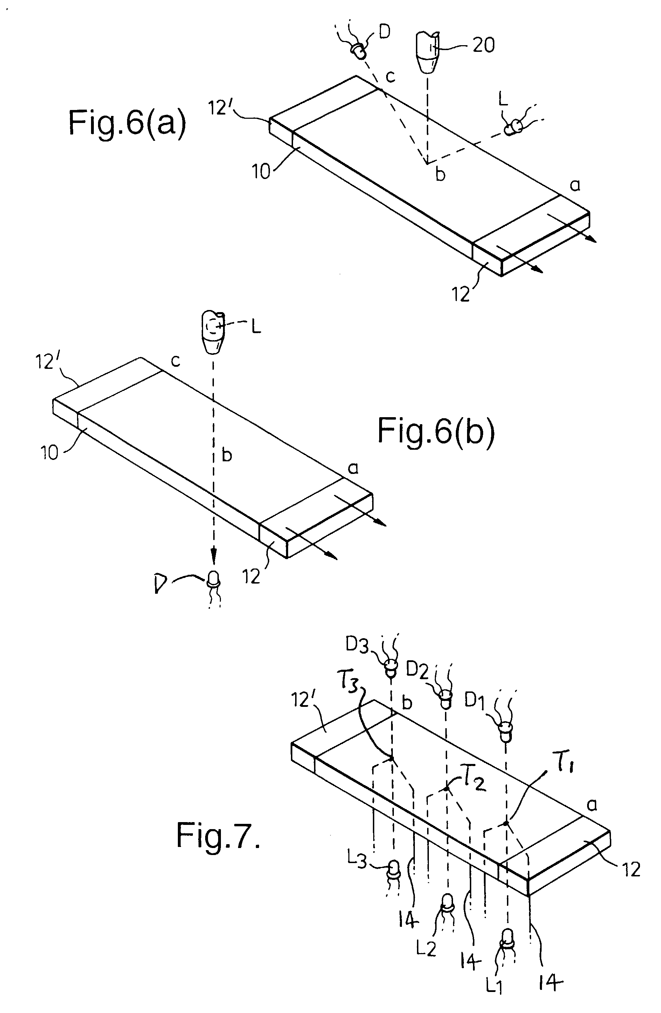

Figure 4 shows the state of the apparatus of Figure 3 at a point in the cooling stage at which the temperature at (a) and (c) are respectively -4°C and -3°C. The temperature at the midpoint (b) of the bar is thus 3.5°C and the illustrated location of the front of the dew wave corresponds to a dewpoint of -3.7°C. As the ends (a) and (b) of the bar are cooled further the front of the dew wave will move progressively towards end (c) and will pass through the mid-point (b) (where the temperature sensor (T) is located) when that midpoint is at the dewpoint, i.e. is at -3.7°C in the example illustrated. Thus a measurement of the temperature at (b) made at precisely the time the dew wave passes through (b) will determine the dewpoint of the atmosphere. For added accuracy a number of optical and temperature sensors similar to sensor (T) can be used spaced apart along the bar, (in an arrangement similar to that shown in Figure 7), to measure the front of the dew wave as it passes through.

Figure 5 illustrates a similar arrangement using a cooled bar 10 having a reflective surface instead of a transparent bar. In this arrangement the electro-optics, i.e. the light-emitting device (L) and the light-sensitive device (D) are disposed on the same side of the bar so that the device (L) can receive light reflected by the bar from light source (L). Again, cooling means 12 and 12' are not shown in Figure 5.

Figure 6(a) illustrates an arrangement in which a remote, infra-red, temperature-measuring instrument 20 is provided to measure the surface temperature of the plate or bar 10 in the region monitored by the electro-optic arrangement comprising light source (L) and light-sensitive device (D). Thus, in these arrangements a temperature sensor (T) embedded in or in contact with the cooled bar is not required. In the arrangement of Figure 6(a), the cooled bar 10 is a mirror, the photodetector (D) receives light reflected from the bar 10 whilst in the embodiment of Figure 6(b), the cooled bar 10 is a transparent bar. Furthermore, in the embodiment of Figure 6(b), the light source (L) is incorporated in the same housing as (and may use the same optics as) the remote, infra-red temperature sensor 20, the photo-detector (D) being disposed on the opposite side of the bar 10 from the sensor 20. To avoid interference between the infra-red temperature sensor 20 and the light source (L) and photodetector (D), a multiplexing arrangement may be used with the temperature being sensed and a check made for the presence of condensation, in rapid alternation.

In practice the dew wave could be arranged to start either at end (a) or end (c) of bar 10. In some embodiments measurement of dewpoint temperature at (b) is made with the wave moving through (b). Alternatively, the cooling may be arranged so that the dew wave stops at (b) and is held under controlled conditions, for example by controlling the cooling means for the bar electronically in response to detection of the dew wave front reaching point (b). It will be understood that in operation of the embodiments of the invention, as in known apparatus, the apparatus operates in a repeating cycle in which the cooled body (mirror or bar 4, 10) is cooled below dewpoint then heated, or allowed to rise in temperature by absorption of heat from the surroundings, to above the dewpoint, to dispel (evaporate) the dew which has formed before commencing cooling in the next cycle, and with the dewpoint being measured in each cycle. As applied to the apparatus of the present invention, this means that the "front" of the dew "wave" repeatedly advances and recedes along the bar 10. The temperature at point (b) can be measured both when the dew wave advance over position (b) and when it recedes over position (b). The temperatures so measured during advancing and receding of the dew "wave" can be averaged for greater precision.

In another arrangement illustrated schematically in Figure 7, a plurality of temperature sensors T₁, T₂ and T₃ is provided, with respective opto-electronic dew detector arrangements, L₁, D₁; L₂, D₂ and L₃, D₃, (L₁, L₂ and L₃ being respective light sources and D₁, D₂ and D₃ respective photo detectors), each temperature sensor (T₁, T₂ or T₃) and its associated dew detector arrangement monitoring a different location on the bar, these locations being spaced apart along the bar. The arrangement of Figure 7 thus provides three dew-point measurements during a full advance, (or recession) of the dew "wave" over the bar 10. Again these measurements may be averaged for greater precision, and/or the detection of dew formation by the detector arrangements D₁, L₁ and D₃, L₃ adjacent the ends of the bar may be used to start and end the cooling of the bar. In a variant of the arrangement of Figure 7, the intermediate temperature sensor T₂ and the dew detection arrangements D₁, L₁ and D₃, L₃ at the ends of the bar 10 may be dispensed with and the temperature at the position of detector arrangement D₂, L₂ deduced from the position of detector arrangement D₂, L₂ in relation to temperature sensors T₁ and T₃ and from the temperatures sensed by sensors T₁ and T₃. Thus, if temperature sensors are provided at positions spaced apart along the bar and a temperature gradient established between the ends (a) and (b) of the bar, and thus between the temperature sensors, then assuming the temperature gradient is uniform, or is otherwise of known law, the temperature at any location along the bar between the temperature sensors can be deduced from the temperatures of these sensors and the distance of the location concerned from the respective sensors. The deduction can, of course, be made automatically by analog or digital computing means incorporated in, or connected with the apparatus.

In a further arrangement, (not shown), the light source/photodetector arrangement used to detect the presence or absence of condensation is arranged to scan the cooled bar, for example by repeatedly moving the light source/photodetector arrangement longitudinally along the bar or by repeatedly moving the bar longitudinally past the light source/photodetector arrangement. In this arrangement, the location of the front edge of the dew "wave" on the bar, (and hence given the temperatures sensed by the temperature sensors, the dewpoint temperature) can be determined from the timing, within the scanning signal, of the signal change from the photodetector which indicates the condensation "wave" front. The corresponding temperature at that location can be calculated from the temperature sensed at one end of the bar and the temperature gradient along the bar, in the same way as in the preceding embodiment referred to. Using three or more temperature detectors spaced apart along the bar in such an arrangement allows appropriate compensation to be applied for departures of the temperature gradient from uniformity.

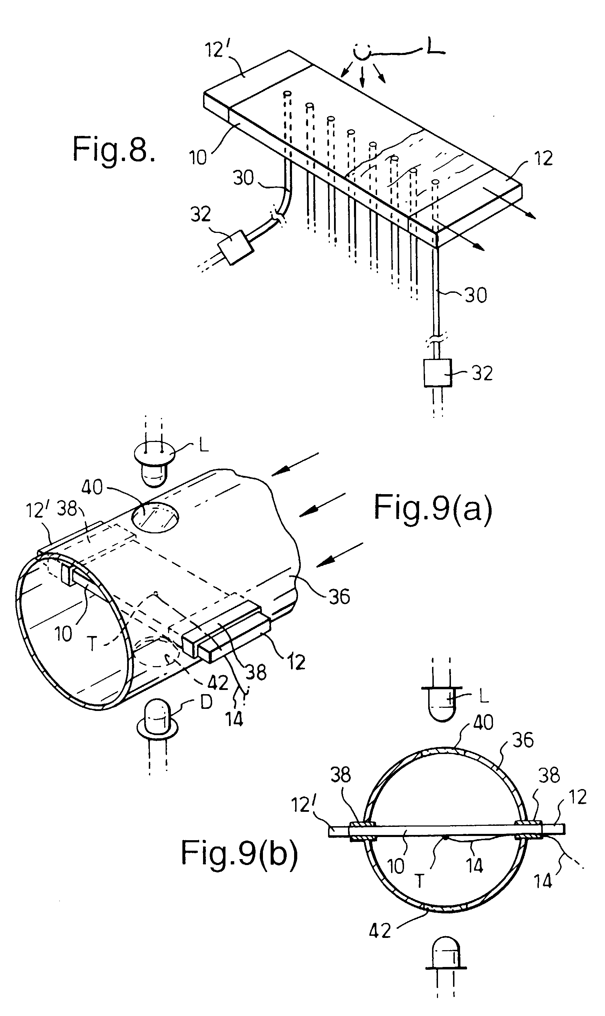

Another possible arrangement for effectively scanning, along the cooled bar, the location monitored for the formation of dew or condensation, is illustrated in Figure 8. In this arrangement, the transparent bar 10 has a plurality of light guides 30, for example fibre optic bundles, terminating in (or closely adjacent, but spaced from), its underface (as illustrated) so as to receive light transmitted through the bar 10 from a light source (L) (indicated schematically) above the bar and arranged to direct a beam of light onto the bar 10. The light guides extend to respective remote light receptors, some of which are indicated schematically at 32 and which may, for example, be photo diodes or photo transistors. The light guides 30, where they meet the bar 10, are spaced apart in a row along the bar. Preferably, as illustrated, the light guides, adjacent the bar 10, extend perpendicular to the major (upper and lower as illustrated) surfaces of the bar. The use of fibre-optic light guides in this manner allows a large number of closely packed locations along the cooled bar to be monitored individually and the collimation provided by the light guides ensures that a relatively small part of the upper surface of the bar is monitored by each light guide. Furthermore, of course, the arrangement utilising light guides allows the electronics to be located entirely at locations remote from the moist gas being monitored. The bar 10 in the arrangement of Figure 8 is cooled, as before, e.g. by cooling means 12, 12', in such a way as to establish a temperature gradient between its ends. The individual photoreceptors 32 connected with the light guides 30 may be addressed sequentially by appropriate electronics (not shown) to provide a close analogue of the physical scanning arrangements described above.

Figures 9a and 9b illustrate schematically an apparatus in accordance with the invention arranged to monitor a stream of gas (indicated by arrows in Figures 9a) flowing through a pipeline 36. In this arrangement, the apparatus includes a section of the pipeline 36 in which the cooled transparent plate 10 is mounted to extend diametrally across the pipe section, in a longitudinal axial plane, and the light source (L) and light sensor (D) are arranged along a perpendicular diameter of the pipe section.

It will be understood that in this arrangement the ends of the cooled bar may extend, as shown, through the wall of the pipe section, via heat-insulating sealing arrangements, indicated schematically at 38 in Figure 9b, to cooling means 12, 12' located outside the pipe-section. Likewise, the light source (L) and light detector (D) (and the temperature sensor if of a remote type such as the sensor 20 of Figure 6a or 6b) may be arranged outside the pipe section as shown, with transparent windows 40, 42 being provided in the wall of the pipe section 36 opposite the light source (L) and detector (D). Alternatively the pipe section 10 may be made of transparent material. Instead of a remote temperature sensor, a temperature transducer (T) as described in relation to Figures la to lc, 3 or 4 may be fixed to the plate 10 within the pipe 36 and may be connected to electrical leads 14 also extending sealingly through sealing arrangements 38, to the exterior of pipe 36, where they are connected with electronic monitoring circuitry (not shown). As in the preceding embodiments, the cooled transparent bar 10 may be made of glass, which, in the context of the apparatus illustrated in Figure 9, has the advantages that it can easily be cleaned to remove any residue or contaminant film and will withstand most corrosive atmospheres.

It will be understood that references to moisture and condensation referred to herein are intended to extend not only to water but to other vaporisable liquids, and to the condensation of vapours of such liquids from gases.

In some embodiments it may not be necessary to cool both ends of the bar 10. Thus where, as will normally be the case in a practical apparatus, the bar 10 is subjected repeatedly to a cycle in which it is cooled until dew forms on the bar and a dewpoint determination is made, and is thereafter heated or allowed to rise in temperature until the dew has evaporated once more, before being cooled again, and so forth, if only one end of the bar is cooled there will be a temperature gradient in the bar during the cooling phase, as indicated in Figures 2(a) to 2(c).

The features disclosed in the foregoing description, in the following claims and/or in the accompanying drawings may, both separately and in any combination thereof, be material for realising the invention in diverse forms thereof.

## Claims

1. Apparatus for dewpoint determination including an elongate body, means for cooling said body whilst establishing a temperature gradient along the body and means for determining the temperature at, and for detecting the appearance of condensation at, a location occupying an intermediate position along said temperature gradient.

2. Apparatus according to claim 1 including means for determining the temperature at, and for detecting the appearance of condensation at, each of a plurality of locations spaced apart along said elongate body.

3. Apparatus according to claim 1 or claim 2 wherein said elongate body is transparent and said condensation detecting means comprises a light source and a photodetector on opposite sides of said bar.

4. Apparatus according to claim 3 wherein said transparent elongate body is exposed on both of said sides to the gas being monitored, so that the light from the light source must pass through condensation on both said sides of said body to reach the photodetector, where dew is present at the respective location, whereby the sensitivity of the apparatus is increased.

5. Apparatus according to any of claims 1 to 4 including means for scanning, along said elongate body, the location monitored by the condensation means and means for deriving the dewpoint, from the position within a scan at which condensation is detected.

6. A method of determining dewpoint, comprising providing an elongate body, cooling said body whilst establishing a temperature gradient along the body and determining the temperature at the front edge of a wave of condensation forming on the body.
